# DEMANDE DE BREVET EUROPEEN

(11) **EP 4 498 190 A1**
(43) Date de publication de la demande: **29.01.2025**
(21) Numéro de dépôt: 24190933.2
(22) Date de dépôt: 25.07.2024
(51) Int. Cl.: G05B 19/042

(54) **SYSTÈME D'INTERACTION DANS LE COCKPIT D'UN AÉRONEF ET UN PROCÉDÉ D'INTERACTION ASSOCIÉ**

(30) Priorité: 26.07.2023 FR 2308058
(71) Demandeur: THALES, 92190 Meudon (FR)
(72) Inventeur: LEULLIER, François, 33700 MERIGNAC (FR); CHABAUD, Thierry, 33700 MERIGNAC (FR)
(74) Mandataire: Lavoix

(57) **Abrégé**

La présente invention concerne un système d'interaction (10) dans le cockpit d'un aéronef pour contrôler au moins un système avionique (15) avec des valeurs de réglage, comprenant :
- un média de réglage (21) configuré pour générer un signal de réglage correspondant à une valeur de réglage sélectionnée par un opérateur suite à une première action, et un signal de validation correspondant à une validation de la valeur de réglage sélectionnée suite à une deuxième action ;
- un module d'affichage (44) configuré pour afficher la valeur de réglage sélectionnée et pour générer un signal de retour comprenant une signature graphique de la valeur de réglage affichée ;
- un module de traitement (52) configuré pour recevoir chaque signal de retour et chaque signal de validation, pour détecter chaque modification de la valeur de réglage et pour vérifier que chaque modification détectée corresponde à un signal de validation.

## Description

La présente invention concerne un système d'interaction dans le cockpit d'un aéronef. La présente invention concerne également un procédé d'interaction associé.

L'invention porte en particulier sur la sécurisation des interactions pour les Interfaces Hommes-Machine (IHM) pour les systèmes avionique critiques, tels que les cockpits d'aéronefs. On entend ici par interaction critique toute interaction dont une activation intempestive non perçue par l'équipage est une condition de panne dont la sévérité de l'impact sur le système est HAZARDOUS (« dangereuse » en français) ou CATASTROPHIC (« catastrophique » en français), tels que définis par exemple par la norme AC 25.1309-1.

De manière connue en soi, le réglage d'un grand nombre de systèmes avioniques critiques s'effectue par le pilote ou par tout autre opérateur en sélectionnant une valeur de réglage pour un tel système, appelée également « setting » en anglais. Dans certains cas, une étape de validation supplémentaire est nécessaire pour valider la sélection effectuée par l'opérateur.

Il est donc clair que toute modification intempestive de la valeur sélectionnée peut conduire à des conséquences graves pour la sécurité du vol. Pour les systèmes avioniques critiques, ces conséquences sont catégorisées comme HAZARDOUS ou CATASTROPHIC.

Une modification intempestive de la valeur sélectionnée peut par exemple intervenir suite à une défaillance d'un système avionique. Le but de l'invention est donc s'assurer que toute modification intempestive du réglage, liée à une défaillance d'un système, soit détectée et remontée à l'opérateur.

À cet effet, l'invention a pour objet un système d'interaction dans le cockpit d'un aéronef pour contrôler au moins un système avionique avec des valeurs de réglage, le système d'interaction.

Ce système comprend un média de réglage des valeurs de réglage associées audit système avionique, le média de réglage étant configuré pour générer un signal de réglage correspondant à une valeur de réglage sélectionnée par un opérateur suite à une première action, et un signal de validation correspondant à une validation de la valeur de réglage sélectionnée suite à une deuxième action de l'opérateur ; un module d'affichage configuré pour afficher la valeur de réglage sélectionnée et pour générer un signal de retour comprenant une signature graphique de la valeur de réglage affichée ; un module de traitement configuré pour recevoir chaque signal de retour issu du module d'affichage et chaque signal de validation issu du média de réglage, pour détecter chaque modification de la valeur de réglage et pour vérifier que chaque modification détectée de la valeur de réglage corresponde à un signal de validation.

Muni de ces caractéristiques, le système d'interaction selon l'invention permet de sécuriser tout réglage des valeurs de réglage associées à un système avionique. En particulier, lorsqu'une modification d'une valeur de réglage intervient sans une commande de validation effectuée par l'opérateur, une incohérence est détectée et peut être remontée à l'opérateur. Cette incohérence peut être remontée à l'opérateur sous toute forme appropriée afin d'attirer son attention. Ceci est avantageux par rapport à un simple changement de l'affichage de la valeur modifiée (par exemple par clignotement et/ou soulignage temporaire(s)) qui peut rester inaperçu par l'opérateur, notamment lorsqu'un tel changement a une durée limitée.

Suivant d'autres aspects avantageux de l'invention, le système d'interaction comprend une ou plusieurs des caractéristiques suivantes, prises isolément ou suivant toutes les combinaisons techniquement possibles :
- le module de traitement est configuré en outre pour émettre une alerte lorsqu'une modification détectée de la valeur de réglage ne correspond à aucun signal de validation ;
- le média de réglage est allouable pour régler des valeurs de réglages associées à des systèmes avioniques différents ;
- le média de réglage est un rotacteur, avantageusement un rotacteur multifonctions ;
   la première action correspondant à une rotation du rotacteur ;
   la deuxième action correspondant à une action autre que la rotation du rotacteur, notamment un appui sur le rotacteur ;
- le signal de réglage et le signal de validation sont générés et transmis par le média de réglage de manière ségréguée :
- la signature graphique de la valeur de réglage affichée est générée par une analyse de pixels représentant la valeur de réglage affichée par le module d'affichage ;
- une première chaine de commande et une première chaine de surveillance ;
   le module d'affichage étant intégrée dans la première chaine de commande et le module de traitement étant intégré dans la première chaine de surveillance ;
- une deuxième chaine de commande et une deuxième chaine de surveillance ;
   la deuxième chaine de surveillance étant configurée pour recevoir le signal de validation pour contrôler une valeur de réglage affichée par la deuxième chaine de commande ; et
- le signal de validation présente un signal discret.

L'invention concerne également un procédé d'interaction dans le cockpit d'un aéronef pour contrôler au moins un système avionique avec des valeurs de réglage.

Le procédé comprend les étapes suivantes :
- générer par un média de réglage un signal de réglage correspondant à une valeur de réglage sélectionnée par un opérateur suite à une première action, et un signal de validation correspondant à une validation de la valeur de réglage sélectionnée suite à une deuxième action de l'opérateur ;
- afficher la valeur de réglage sélectionnée par un module d'affichage ;
- générer un signal de retour comprenant une signature graphique de la valeur de réglage affichée ;
- recevoir chaque signal de retour issu du module d'affichage et chaque signal de validation issu du média de réglage ;
- détecter chaque modification de la valeur de réglage ;
- vérifier que chaque modification détectée de la valeur de réglage corresponde à un signal de validation.

L'invention concerne également un produit programme d'ordinateur comportant des instructions logicielles qui, lorsqu'elles sont exécutées par un ordinateur, mettent en oeuvre le procédé tel que défini ci-dessus.

L'invention apparaîtra plus clairement à la lecture de la description qui va suivre, donnée uniquement à titre d'exemple non limitatif, et faite en référence aux dessins dans lesquels :
- [Fig. 1] la figure 1 est une vue schématique d'un système d'interaction selon un premier mode de réalisation de l'invention ;
- [Fig. 2] la figure 2 est une vue schématique d'un système d'interaction selon un deuxième mode de réalisation de l'invention ; et
- [Fig. 3] la figure 3 est un organigramme d'un procédé d'interaction selon l'invention, le procédé d'interaction étant mis en oeuvre par le système d'interaction de la figure 1 ou de la figure 2.

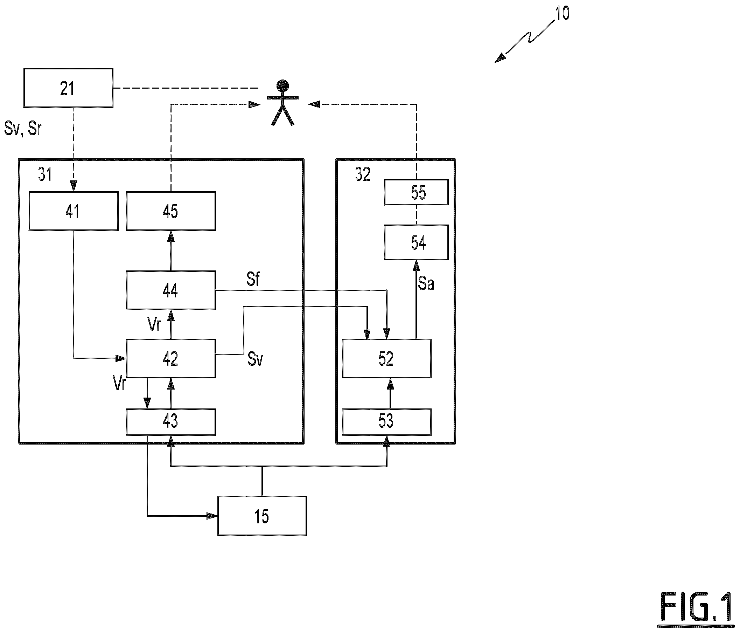

On a en effet représenté sur la figure 1 un système d'interaction 10 selon un premier mode de réalisation de l'invention.

Ce système d'interaction 10 est embarqué dans un cockpit d'aéronef. On entend par « cockpit », l'endroit à partir duquel le pilotage de l'aéronef s'effectue par un ou plusieurs opérateurs. Ainsi, selon un exemple, le cockpit fait partie de l'aéronef et l'aéronef présente par exemple un avion ou un hélicoptère. Dans ce cas, le ou chaque opérateur est un pilote. Selon un autre exemple, le cockpit est déporté de l'aéronef qui présente par exemple un drone. Dans un tel cas, le pilotage de l'aéronef s'effectue alors à distance par un ou plusieurs opérateurs.

Le système d'interaction 10 permet à l'opérateur d'interagir avec au moins un système avionique 15. En particulier, le système d'interaction 10 permet de contrôler un tel système avec des valeurs de réglage, comme cela sera expliqué plus en détail par la suite.

Avantageusement, le système d'interaction 10 permet à l'opérateur d'interagir avec une pluralité de systèmes avioniques 15.

Le ou chaque système avionique 15 est choisi par exemple dans la liste comprenant :
- un pilote automatique ;
- un système de navigation (tel qu'un système GNSS, une centrale à inertie, etc.) ;
- un radar (anticollision, météo, etc.) ;
- un instrument de navigation (altimètre, variomètre, etc.) ;
- un système de gestion des groupes motopropulseurs, hydrauliques et/ou électriques ;
- un système de planification de missions.

Le ou chaque système avionique 15 est contrôlé au moins partiellement par le système d'interaction 10 en utilisant des valeurs de réglage sélectionnables par l'opérateur.

Une valeur de réglage correspond donc à la valeur d'un paramètre de réglage particulier (« setting » en anglais) du système avionique 15 qui permet de contrôler au moins partiellement celui-ci.

Par exemple, lorsque le système avionique 15 est un altimètre, le paramètre de réglage peut présenter la baro-correction. Dans ce cas, la valeur de réglage correspond donc à une valeur de baro-correction sélectionnable par l'opérateur en fonction des conditions météorologiques.

Pour sélectionner une valeur de réglage pour le système avionique 15 correspondant, le système d'interaction 10 comprend un média de réglage 21. Ce média réglage 21 est par exemple associé au système avionique 15 correspondant de manière fixe. Selon un autre exemple de réalisation, le média de réglage 21 est allouable à ce système 15. Dans ce dernier cas, le média de réglage 21 est également allouable à au moins un autre système avionique 15 par l'opérateur ou par un autre système. Par exemple, dans certains cas, avant d'actionner le média de réglage 21 pour sélectionner une valeur de réglage, l'opérateur a la possibilité de sélectionner d'abord le système avionique 15 pour lequel le réglage est à appliquer. Cette sélection se fait par exemple à partir du média de réglage 21 ou à partir de tout autre dispositif disponible (y compris un dispositif tactile).

Le média de réglage 21 est actionnable par l'opérateur selon une première action permettant de sélectionner une valeur de réglage et une deuxième action permettant de valider cette sélection. La deuxième action est différente de la première action.

Le média de réglage 21 est configuré pour générer un signal de réglage Sr suite à la première action et un signal de validation Sv suite à la deuxième action.

En particulier, le signal de réglage Sr permet de décrire la première action effectuée par l'opérateur afin d'en déduire la valeur de réglage sélectionnée par l'opérateur. Ce signal peut par exemple présenter une onde électromagnétique encodant cette première action.

Le signal de validation Sv permet d'encoder le fait qu'une validation de la valeur sélectionnée a eu lieu. Par exemple, ce signal de validation Sv présente un signal discret égal à « 1 » lorsqu'une deuxième action est exercée et « 0 » dans tous les autres cas.

Avantageusement, le média de réglage 21 est configuré pour générer et transmettre le signal de réglage Sr et le signal de validation Sv de manière ségréguée.

Avantageusement, le média de réglage 21 présente un rotacteur. Dans un tel cas, la première action correspond à une rotation du rotacteur et la deuxième action correspond par exemple à un appui sur le rotacteur.

De manière plus avantageuse, le rotacteur est un rotacteur multifonctions. Autrement dit, le rotacteur peut être alloué à des systèmes avioniques différents, comme cela a été expliqué ci-dessus.

Selon le premier mode de réalisation illustré sur la figure 1, le système d'interaction 10 présente une architecte de type « Smart Display » (« Écran intelligent » en français) connue en soi.

Selon cette architecture, le système d'interaction 10 comprend une première chaine de commande 31 et une première chaine de surveillance 32 permettant de surveiller le fonctionnement de la première chaine de commande 31. La première chaine de commande 31 correspond donc à la dénomination anglaise « COM » (de l'anglais « COMMAND ») et la première chaine de surveillance 32 correspond à la dénomination anglaise « MON » (de l'anglais « MONITORING »). Avantageusement, la première chaine de surveillance 32 est mise en oeuvre de manière dissemblable de la première chaine de commande 31.

La première chaine de commande 31 comprend un module d'acquisition 41 connecté au média de réglage 21 et apte à acquérir des signaux Sr, Sv issus de ce média 21, un module de traitement 42 apte à traiter les signaux acquis, un module I/O 43 connecté au ou à chaque système avionique 15, un module d'affichage 44 apte à générer des images graphiques à partir des données traitées par le module de traitement 42 et un écran 45 apte à afficher les images générées par le module d'affichage 44.

En particulier, le module de traitement 42 est apte à recevoir le signal de réglage Sr acquis par le module d'acquisition 41 pour en déduire la valeur de réglage Vr sélectionnée par l'opérateur. Le module de traitement 42 est apte en outre à transmettre cette valeur Vr au système avionique 15 correspondant à travers le module I/O 43 et au module d'affichage 44. Le module de traitement 42 est apte en outre à recevoir le signal de validation Sv acquis par le module d'acquisition 41 et à le transmettre à la première chaine de surveillance 32.

Dans certains exemples, le module d'acquisition 41 ou le module de traitement 42 est apte à protéger le signal de validation Sv en y rajoutant par exemple un code CRC.

Le module d'affichage 44 est apte à générer une image graphique correspondant à la valeur de réglage Vr sélectionnée pour l'afficher sur l'écran 45. Le module d'affichage 44 est apte en outre à générer un signal de retour Sf (« feedback » en anglais) comprenant une signature graphique de la valeur de réglage affichée sur l'écran 45. Cette signature graphique de la valeur de réglage affichée est par exemple générée par une analyse de pixels représentant la valeur de réglage affichée. Le module d'affichage 44 est apte en outre à envoyer ce signal à la première chaine de surveillance 32.

La première chaine de surveillance 32 a une structure similaire à celle de la première chaine de commande 31 et comprend en particulier un module de traitement 52, un module I/O 53, un module d'affichage 54 et un écran 55.

Le module de traitement 52 de la première chaine de surveillance 32 est apte à recevoir le signal de validation Sv et le signal retour Sf transmis par la première chaine de commande 31. Le module de traitement 52 de la première chaine de surveillance 32 est apte en outre à analyser le signal de retour Sf pour détecter chaque modification de la valeur de réglage et lorsqu'une telle modification est détectée, à vérifier qu'une telle modification correspond à un signal de validation Sv reçu.

Lorsqu'une telle vérification n'est pas réussie, le module de traitement 52 de la première chaine de surveillance 32 est apte à générer un signal d'alerte Sa. Ce signal d'alerte Sa est destiné à être communiqué à l'opérateur par exemple à travers au moins l'un des écrans 45 ou 55, ou sous toute autre forme appropriée (sonore, tactile, etc.).

Les modules 42 à 44 et 52 à 54 des chaines 31, 32 sont aptes à mettre en oeuvre d'autres fonctionnalités du système d'interaction 10. Ces autres fonctionnalités sont connues en soi et ne seront pas décrites par la suite.

De plus, chacune de ces modules 42 à 44 et 52 à 54 est par exemple réalisé sous forme d'un logiciel et/ou au moins partiellement d'un composant logique programmable, tel qu'un FPGA (de l'anglais « Field Programmable Gate Array »), ou encore d'un circuit intégré, tel qu'un ASIC (de l'anglais « Application Specific Integrated Circuit »). Par ailleurs, chacun des modules de traitement 42, 52 peut correspondre à un processeur (« CPU » en anglais) et chacun des modules d'affichage 44, 54 peut correspondre à une carte graphique (« GPU » en anglais).

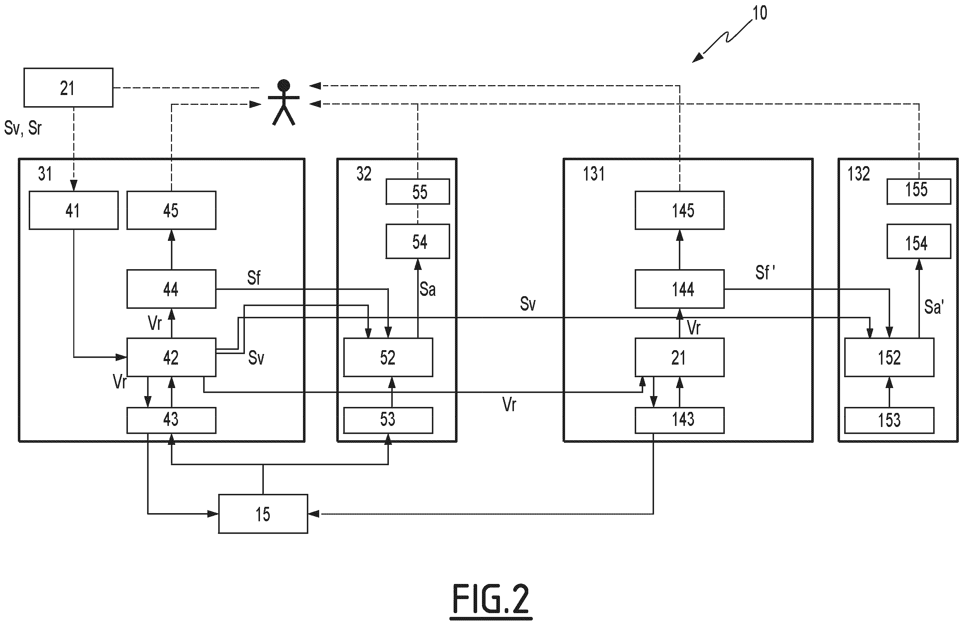

La figure 2 illustre le système d'interaction 10 selon un deuxième mode de réalisation. Selon ce mode réalisation, le système d'interaction 10 comprend le média de réglage 21, la première chaine de commande 31 et la première chaine de surveillance 32, tels que décrits précédemment. De plus, comme dans le cas précédent, le système d'interaction 10 permet de contrôler un ou plusieurs systèmes avioniques 15 avec des valeurs de réglage.

Selon le deuxième mode de réalisation, le système d'interaction 10 présente deux chaines d'affichage mises en parallèle. Ainsi, le système d'interaction 10 comprend en outre une deuxième chaine de commande 131 de type « COM » et une deuxième chaine de surveillance 132 de type « MON ».

Chacune de ces chaines 131, 132 comprend les modules 142 à 144 et les modules 152 à 154 analogues respectivement aux modules 42 à 44 et aux modules 52 à 54 respectivement de la première chaine de commande 31 et de la première chaine de surveillance 32. De plus, chacune de ces chaines 131, 132 comprend en outre un écran 145, 155.

Outre les fonctionnalités décrites en relation avec le premier mode de réalisation, le module de traitement 42 de la première chaine de commande 31 est apte à transmettre la valeur Vr sélectionnée par l'opérateur au module de traitement 142 de la deuxième chaine de commande 131 et le signal de validation Sv au module de traitement 152 de la deuxième chaine de surveillance 132.

Le module de traitement 142 de la deuxième chaine de commande 131 est alors apte à synchroniser cette valeur de réglage Vr avec sa valeur de réglage et à transmettre cette valeur synchronisée au module d'affichage 144 de la deuxième chaine de commande 131.

Le module d'affichage 144 de la deuxième chaine de commande 131 est apte alors à afficher la valeur synchronisée sur l'écran 145 et à générer un signal de retour Sf' comprenant une signature graphique de la valeur de réglage affichée sur l'écran 145.

Le module de traitement 152 de la deuxième chaine de surveillance 132 est apte à recevoir le signal de validation Sv issu du module de traitement 42 de la première chaine de commande 31 et le signal de retour Sf' issu du module d'affichage 144 de la deuxième chaine de commande 131, pour vérifier la cohérence de ces signaux comme cela a été décrit précédemment. Ainsi, lorsqu'une modification de la valeur de réglage Vr ne correspond à aucun signal de validation Sv, le module de traitement 152 de la deuxième chaine de surveillance 132 est apte à émettre un signal d'alerte Sa' destiné à être transmis à l'opérateur.

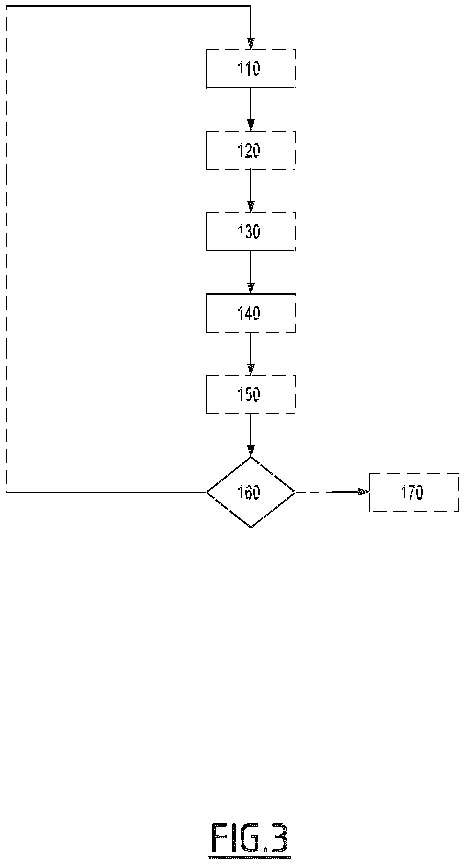

Le procédé d'interaction 100 selon l'invention sera désormais décrit en référence à la figure 3 présentant un organigramme de ses étapes. Ce procédé est mis en oeuvre par le système d'interaction 10, décrit ci-dessus en relation avec l'un des modes de réalisation.

Initialement, il est considéré que le média de réglage 21 est associé à l'un des systèmes avioniques 15. De plus, le fonctionnement de ce système avionique 15 est défini par au moins un paramètre de réglage ayant une valeur de réglage déterminée. Cette valeur de réglage présente par exemple une valeur par défaut ou une valeur précédemment choisie par l'opérateur.

Lors d'une première étape 110, l'opérateur exerce une première action sur le média de réglage 21 pour sélectionner une nouvelle valeur de réglage. Une fois sélectionnée, l'opérateur exerce une deuxième action sur ce média de réglage 21 pour valider sa sélection.

Le média de réglage 21 génère donc un signal de réglage Sr correspondant à la valeur de réglage sélectionnée et un signal de validation Sv correspondant à la validation de la valeur de réglage sélectionnée.

Lors de l'étape suivante 120, le module de traitement 42, 142 de l'une des chaines de commande 31, 131 ou de chaque chaine de commande 31, 131 détermine la valeur de réglage Vr sélectionnée à partir du signal de réglage Sr reçu. Puis, la valeur de réglage Vr sélectionnée est affichée sur au moins l'un des écrans. Cela est fait par exemple par le module d'affichage 44,144 de l'une des chaines de commande 31, 131 ou de chaque chaine de commande 31, 131.

Lors de l'étape suivante 130, le module d'affichage 44, 144 correspondant génère un signal de retour Sf, Sf' comprenant une signature graphique de la valeur de réglage affichée.

Lors de l'étape suivante 140, le module de traitement 52, 152 de l'une des chaines de surveillance 32, 132 ou de chaque chaine de surveillance 32, 132 reçoit le signal de retour Sf, Sf' issu du module d'affichage 44, 144 correspondant et chaque signal de validation Sv issu du média de réglage 21.

Lors de l'étape suivante 150, le module de traitement 52, 152 de l'une des chaines de surveillance 32, 132 ou de chaque chaine de surveillance 32, 132 détecte chaque modification de la valeur de réglage Vr.

Lors de l'étape suivante 160, le module de traitement 52, 152 de l'une des chaines de surveillance 32, 132 ou de chaque chaine de surveillance 32, 132 vérifie que chaque modification détectée de la valeur de réglage Vr corresponde à un signal de validation Sv.

Lorsque cela est le cas, le procédé est donc réitéré pour chaque nouvelle modification de la valeur de réglage Vr.

Lorsqu'au moins une modification détectée ne correspond à aucun signal de validation, le module de traitement 52, 152 correspondant émet alors un signal d'alerte Sa, Sa' lors d'une étape 170.

On conçoit alors que l'invention présente un certain nombre d'avantages.

Tout d'abord, comme expliqué précédemment, l'invention permet de détecter chaque modification intempestive d'une valeur de réglage et en avertir de manière certaine l'opérateur.

De plus, l'invention utilise l'architecture de type « COM » - « MON » ce qui assure le niveau de criticité requis. En outre, l'invention peut être facilement intégrée dans une architecture existante sans modification significative de celle-ci.

Enfin, l'invention peut être appliqué à de différents types de médias de réglage qui peuvent éventuellement être allouables à des systèmes avioniques différents. Par exemple, l'utilisation d'un rotacteur multifonctions est particulièrement avantageuse dans le cadre de l'invention.

Bien entendu, l'invention reste applicable à d'autres architectures du système d'interaction. Par exemple, une telle architecture peut avoir une seule chaine de traitement et non nécessairement au moins deux de type « MON » et « COM » comme décrit précédemment.

## Revendications

1. Système d'interaction (10) dans le cockpit d'un aéronef pour contrôler au moins un système avionique (15) avec des valeurs de réglage, le système d'interaction (10) comprenant :
- un média de réglage (21) des valeurs de réglage associées audit système avionique (15), le média de réglage (21) étant configuré pour générer un signal de réglage correspondant à une valeur de réglage sélectionnée par un opérateur suite à une première action, et un signal de validation correspondant à une validation de la valeur de réglage sélectionnée suite à une deuxième action de l'opérateur ;
- un module d'affichage (44 ; 144) configuré pour afficher la valeur de réglage sélectionnée et pour générer un signal de retour comprenant une signature graphique de la valeur de réglage affichée ;
- un module de traitement (52 ; 152) configuré pour recevoir chaque signal de retour issu du module d'affichage (44 ; 144) et chaque signal de validation issu du média de réglage (21), pour détecter chaque modification de la valeur de réglage et pour vérifier que chaque modification détectée de la valeur de réglage corresponde à un signal de validation.

2. Système d'interaction (10) selon la revendication 1, dans lequel le module de traitement (52 ; 152) est configuré en outre pour émettre une alerte lorsqu'une modification détectée de la valeur de réglage ne correspond à aucun signal de validation.

3. Système d'interaction (10) selon la revendication 1 ou 2, dans lequel le média de réglage (21) est allouable pour régler des valeurs de réglages associées à des systèmes avioniques différents (15).

4. Système d'interaction (10) selon l'une quelconque des revendications précédentes, dans lequel le média de réglage (21) est un rotacteur, avantageusement un rotacteur multifonctions ;
la première action correspondant à une rotation du rotacteur ;
la deuxième action correspondant à une action autre que la rotation du rotacteur, notamment un appui sur le rotacteur.

5. Système d'interaction (10) selon l'une quelconque des revendications précédentes, dans lequel le signal de réglage et le signal de validation sont générés et transmis par le média de réglage (21) de manière ségréguée.

6. Système d'interaction (10) selon l'une quelconque des revendications précédentes, dans lequel la signature graphique de la valeur de réglage affichée est générée par une analyse de pixels représentant la valeur de réglage affichée par le module d'affichage (44 ; 144).

7. Système d'interaction (10) selon l'une quelconque des revendications précédentes, comprenant une première chaine de commande (31) et une première chaine de surveillance (32) ;
le module d'affichage (44) étant intégrée dans la première chaine de commande (31) et le module de traitement (52) étant intégré dans la première chaine de surveillance (32).

8. Système d'interaction (10) selon la revendication 7, comprenant en outre une deuxième chaine de commande (131) et une deuxième chaine de surveillance (132) ;
la deuxième chaine de surveillance (132) étant configurée pour recevoir le signal de validation pour contrôler une valeur de réglage affichée par la deuxième chaine de commande (131).

9. Système d'interaction (10) selon l'une quelconque des revendications précédentes, dans lequel le signal de validation présente un signal discret.

10. Procédé d'interaction dans le cockpit d'un aéronef pour contrôler au moins un système avionique (15) avec des valeurs de réglage ;
le procédé comprenant les étapes suivantes :
- générer (110) par un média de réglage (21) un signal de réglage correspondant à une valeur de réglage sélectionnée par un opérateur suite à une première action, et un signal de validation correspondant à une validation de la valeur de réglage sélectionnée suite à une deuxième action de l'opérateur ;
- afficher (120) la valeur de réglage sélectionnée par un module d'affichage (44 ; 144) ;
- générer (130) un signal de retour comprenant une signature graphique de la valeur de réglage affichée ;
- recevoir (140) chaque signal de retour issu du module d'affichage (44 ; 144) et chaque signal de validation issu du média de réglage (21) ;
- détecter (150) chaque modification de la valeur de réglage ;
- vérifier (160) que chaque modification détectée de la valeur de réglage corresponde à un signal de validation.
